Europäisches Patentamt

European Patent Office

Office européen des brevets

(11) Veröffentlichungsnummer: **0 434 950 A2**

# EUROPÄISCHE PATENTANMELDUNG

(21) Anmeldenummer: 90121571.5

(22) Anmeldetag: 10.11.90

(51) · Int. Cl.⁵: **H04B 1/58**

(30) Priorität: 23.12.89 DE 3942758
30.04.90 DE 4013885

(43) Veröffentlichungstag der Anmeldung:
03.07.91 Patentblatt 91/27

(84) Benannte Vertragsstaaten:
**AT BE CH DE DK ES FR GB GR IT LI LU NL SE**

(71) Anmelder: Standard Elektrik Lorenz
Aktiengesellschaft
Lorenzstrasse 10
W-7000 Stuttgart 40(DE)

(72) Erfinder: **Zanzig, Hans-Jürgen**
**Blammerbergstrasse 39**
**W-7252 Weil der Stadt(DE)**
Erfinder: **Maurer, Michael**
**Herrenhaldenstrasse 7**
**W-7050 Waiblingen(DE)**

(74) Vertreter: **Brose, Gerhard et al**
**Standard Elektrik Lorenz AG Patent- und**
**Lizenzwesen Postfach 30 09 29**
**W-7000 Stuttgart 30(DE)**

(54) Nachbildung einer komplexen Impedanz und Schnittstelle mit einer solchen Nachbildung.

(57) Stand der Technik: Zweidraht-Vierdraht-Schnittstellen mit darin enthaltenen Nachbildungen sind allgemein bekannt.

Technisches Problem: Die in der Nachbildung zwangsläufig enthaltene Kapazität soll unabhängig von dem nach außen wirksamen Wert frei wählbar sein. Die ganze Schnittstelle soll nur eine Kapazität enthalten.

Grundgedanke: Die Nachbildung (N) wird durch einen rückgekoppelten Verstärker (V; VS1, VS2) und einen ohmschen Widerstand (RS1, RS2) gebildet. Die am ohmschen Widerstand gemessene Spannung wird derart phasenrichtig zurückgekoppelt, daß sich insgesamt die vorgegebene Phasenbeziehung und das vorgegebene Betragsverhältnis zwischen Spannung und Strom, d.h., die richtige Impedanz, ergibt.

Vorteile: Erdsymmetrische und erdunsymmetrische Schnittstellen sind gleicherweise einfach mit nur einer Kapazität realisierbar. Gleichtaktsignale können einfach ausgewertet werden (SSE); eine Gleichtaktsignalisierung (DS) ist möglich. Der Strom auf der Zweidrahtleitung kann an einem vorgegebenen Widerstand gemessen werden.

FIG.1

# NACHBILDUNG EINER KOMPLEXEN IMPEDANZ UND SCHNITTSTELLE MIT EINER SOLCHEN NACHBILDUNG

Die Erfindung betrifft eine Nachbildung einer komplexen Impedanz, insbesondere die Nachbildung der Impedanz einer Fernsprechteilnehmerleitung, sowie eine Zweidraht-Vierdraht-Schnittstelle mit einer solchen Nachbildung.

Zweidraht-Vierdraht-Schnittstellen oder auch Gabelschaltungen sind in der Fernsprech- und Übertragungstechnik seit langem bekannt. Gabelschaltungen sind Dreitore mit der Aufgabe, einen Empfänger (z.B. die Hörkapsel eines Fernsprechgeräts) von einem Sender (z.B. die Sprechkapsel eines Fernsprechgeräts) zu entkoppeln und dennoch beide mit einer Zweidrahtleitung zu koppeln. Um dies zu erreichen, ist zusätzlich noch eine Leitungs-Nachbildung erforderlich. Vergl. hierzu z.B. K. Steinbuch, W. Rupprecht, Nachrichtentechnik, Springer-Verlag Berlin u.a. 1973, S.235-241. Die Deutsche Bundespost fordert derzeit die Nachbildung einer Leitung, deren Impedanz als Reihenschaltung eines Widerstands zu 220 Ohm mit der Parallelschaltung aus einem Widerstand zu 820 Ohm und einer Kapazität zu 115 nF ausgebildet ist. Andere Postverwaltungen geben die gleiche Anordung mit ähnlichen Werten vor.

Gerade bei denjenigen Einrichtungen, die für jeden einzelnen Teilnehmer vorhanden sein müssen, ist eine Aufwands- und Kostenreduzierung dringendst erforderlich. Deshalb werden diese Einrichtungen, zu denen auch die Zweidraht-Vierdraht-Schnittstellen mit den darin enthaltenen Nachbildungen gehören, möglichst als integrierte Schaltungen ausgeführt. Besonders störend sind dabei die Kapazitäten. Eine Mindestforderung ist nun die, daß anstelle eines vorgegebenen Kapazitätswerts ein beliebiger anderer verwendet werden kann und daß trotzdem die geforderte Eigenschaft erreicht wird. Eine Zweidraht-Vierdraht-Schnittstelle hat verschiedene Forderungen gleichzeitig zu erfüllen. Bei vielen bekannten Ausführungen sind deshalb oft mehrere Impedanzen mit kapazitivem Anteil enthalten, die in einem vorgegebenen Verhältnis zueinander stehen müssen. Die Toleranzen der Bauelemente müssen dann sehr eng gewählt werden, weil oft Abweichungen des Absolutwertes weniger ausmachen als Abweichungen untereinander. Das Ziel ist deshalb, mit möglichst wenig Impedanzen, möglichst nur mit einer Impedanz, auszukommen.

Der Erfindung liegt die Aufgabe zugrunde, mit geringem Aufwand realisierbare Nachbildungen und Zweidraht-Vierdraht-Schnittstellen anzugeben.

Die Aufgabe wird gelöst durch eine Nachbildung gemäß der Lehre des Anspruchs 1 und eine Schnittstelle gemäß der Lehre des Anspruchs 10.

Der der Erfindung zugrundeliegende Gedanke besteht darin, den Ausgang eines Verstärkers über einen Meßwiderstand und ein komplexes Rückkopplungsnetzwerk derart auf den Eingang des Verstärkers zurückzukoppeln, daß am verstärkerfernen Ende des Meßwiderstandes die für die Nachbildung erforderliche Phasenbeziehung zwischen Spannung und Strom auftritt.

Für den sehr häufigen Fall, daß die nachzubildende komplexe Impedanz aus der Reihenschaltung eines ohmschen Widerstands mit einer komplexen Teilimpedanz besteht, kann der Ausgangsverstärker, gegebenenfalls zusammen mit einer weiteren Verstärkerstufe, so ausgebildet sein, daß sich ein Verstärker ergibt, dessen Verstärkungsfaktor gleich einem reellen Vielfachen der komplexen Teilimpedanz ist, und daß die von diesem Verstärker zu verstärkende Spannung gleich der Ausgangsspannung der Meßanordnung ist, die den Strom in dem als ohmscher Meßwiderstand ausgebildeten Ausgangswiderstand mißt (Anspruch 2).

Soll der Verstärkungsfaktor eines rückgekoppelten Verstärkers proportional zu der vorgegebenen Teilimpedanz sein, so kann dies dadurch erreicht werden, daß die Teilimpedanz selbst in dessen Rückkopplungszweig gelegt wird. Da der Verstärkungsfaktor weiter durch einen dann ohmschen Widerstand bestimmt wird, kann anstelle der Teilimpedanz selbst auch eine Impedanz mit gleichem Aufbau, aber in allen Bauelementen um denselben reellen Faktor verkleinerten oder vergrößerten Werten verwendet werden (Anspruch 3).

Wird der Verstärker zweistufig aufgebaut und ist in der ersten Stufe die Impedanz im Rückkopplungszweig und die zweite Stufe reell, so kann die zweite Stufe als Summierverstärker aufgebaut sein. An dieser Stelle kann dann ein Signal eingekoppelt werden, ohne daß dessen Frequenzgang beeinflußt und durch eine weitere gleichartige Impedanz ausgeglichen werden müßte. Dennoch kann die Impedanz wie vorgegeben aufgebaut und um einen beliebigen reellen Faktor verkleinert oder vergrößert sein (Anspruch 4).

Die Nachbildung kann durch einen zusätzlichen Inverter und einen weiteren Widerstand symmetrisch gemacht werden (Anspruch 5).

Wenn Gleichtaktsignale vorkommen können oder sollen, muß an beiden Anschlüssen der Nachbildung der Strom gemessen und im Meßergebnis der Gleichtaktstrom eliminiert werden (Anspruch 6).

Soll darüber hinaus die Nachbildung einen unabhängig von der nachzubildenden Impedanz frei vorgebbaren ohmschen Serienanteil als Meßwiderstand aufweisen, der der Messung des Stroms auf der Leitung dienen kann, so kann dies durch einen rein reell wirkenden Zweig vom Ausgang der Meßanordnung zum Eingang des Ausgangsverstärkers erreicht werden (Anspruch 7).

Es gibt dabei zwei besonders vorteilhafte Bemessungen:

- Der reell wirkende Zweig ist so bemessen, daß die nachgebildete Impedanz gleich einem reellen Vielfachen der zweiten komplexen Impedanz ist (Anspruch 8).
- Der reelle Zweig ist so bemessen, daß trotz eines ohmschen Serienanteils der nachzubildenden komplexen Impedanz die zweite komplexe Impedanz keinen ohmschen Serienanteil enthält (Anspruch 9).

Die erfindungsgemäße Schnittstelle macht in vorteilhafter Weise von der erfindungsgemäßen Nachbildung Gebrauch.

Wie schon bei der Nachbildung erwähnt, kann auch bei der Schnittstelle für den sehr häufigen Fall, daß die nachzubildende Impedanz aus der Reihenschaltung eines ohmschen Widerstands mit einer komplexen Teilimpedanz besteht, der Aus-gangsverstärker, gegebenenfalls zusammen mit ei-ner weiteren Verstärkerstufe, so ausgebildet sein, daß sich ein Verstärker ergibt, dessen Verstärkungsfaktor gleich einem reellen Vielfachen der komplexen Teilimpedanz ist, und daß die von diesem Verstärker zu verstärkende Spannung gleich der Ausgangsspannung der Meßanordnung ist, die den Strom in dem als ohmscher Meßwiderstand ausgebildeten Ausgangswiderstand mißt (Anspruch 11).

Die Einspeisung des empfangenen Signals erfolgt dann besonders einfach und, ohne daß der Frequenzgang beeinflußt wird, durch einen zweistufigen Verstärker mit der zweiten Stufe als Summierverstärker (Anspruch 12).

Mit einer symmetrisch ausgebildeten Nachbildung wird auch die Schnittstelle (erd-)symmetrisch (Anspruch 13).

Wird die Nachbildung symmetrisch ausgebildet, so besteht die Möglichkeit, auf der Zweidrahtleitung auf einfache Weise durch Gleichtakt-(Längs-) Signale zusätzliche Information, z.B. Steuersignale vom angeschlossenen Teilnehmer, zu übertragen und durch einen auf erdunsymmetri-sche Signale ansprechenden Empfänger auszuwer-ten. Es besteht dabei sogar die Möglichkeit, die Zweidrahtleitung für die erdsymmetrischen Signale (Sprachsignale) anders abzuschließen als für die Gleichtaktsignale (Steuersignale). Die erdsymmetrischen Signale sind durch die Nachbildung abgeschlossen, die Gleichtaktsignale sind durch die Meßwiderstände abgeschlossen, die am Ausgang des Verstärkers und des Inverters gleichspannungsmäßig auf Masse liegen (Anspruch 14).

Ohne die Widerstandsverhältnisse zu ändern, können die Ausgänge des Verstärkers und des Inverters gleichspannungsmäßig auf eine Schwell-spannung gelegt werden, wodurch Gleichtaktstörsi-gnale unwirksam werden (Anspruch 15).

Soll die in der Schnittstelle enthaltene Nachbildung einen unabhängig von der nachzubildenden Impedanz frei vorgebbaren ohmschen Serienanteil als Meßwiderstand aufweisen, der der Messung des Stroms auf der Leitung dienen kann, so kann dies durch einen rein reell wirkenden Zweig vom Ausgang der Meßanordnung zum Eingang des Ausgangsverstärkers erreicht werden (Anspruch 16).

Im zuletzt genannten Fall (frei vorgebbarer Meßwiderstand) erfolgt die Einkopplung des Signals von der Empfangsleitung vorteilhafterweise so, daß der erste Zweig der Schnittstelle an der Meßanordnung in die Nachbildung eingekoppelt wird und somit die zweite komplexe Impedanz und den rein reell wirkenden Zweig enthält und daß ein zweiter rein reell wirkender Zweig direkt von der Empfangsleitung zum Ausgangsverstärker führt und die Wirkung des (ersten) rein reell wirkenden Zweiges auf den ersten Zweig der Schnittstelle aufhebt (Anspruch 17).

Im folgenden wird die Erfindung unter Zuhilfenahme der beiliegenden Zeichnungen weiter erläutert.

Fig. 1   zeigt ein Ausführungsbeispiel einer erfindungsgemäßen Nachbildung.

Fig. 2   zeigt ein Ausführungsbeispiel einer er-findungsgemäßen Schnittstelle mit ei-ner darin enthaltenen erfindungsge-mäßen Nachbildung.

Fig. 3   zeigt ein weiteres Ausführungsbeispiel einer erfindungsgemäßen Schnittstelle mit einer darin enthaltenen erfindungsgemäßen Nachbildung.

Fig. 4   zeigt den Aufbau der durch die Nachbildung nachzubildenden Impedanz.

Fig. 5   zeigt einen bevorzugten Anwendungsfall.

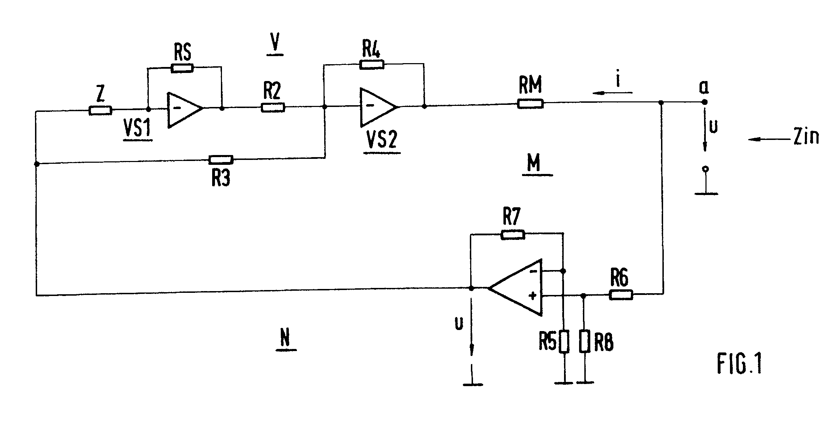

Die Nachbildung N nach Fig. 1 enthält eine Meßanordnung M und einen Verstärker V.

Die Meßanordnung M besteht aus einem Meßwiderstand RM und einem Meßverstärker, wobei der Einfachheit halber und weil kein zusätzlicher Freiheitsgrad benötigt wird, der Verstärkungsfaktor gleich 1 gewählt ist. Der Meßwiderstand RM verbindet den Ausgang des Verstärkers V mit einem Anschluß a, der Nachbildung N. Der andere Anschluß ist geerdet. Der Meßwiderstand RM wird von dem die Nachbildung N durchfließenden Strom i durchflossen. Zwischen den Anschlüssen der Nachbildung N liegt die Spannung u. Am Ausgang der Meßanordnung liegt ebenfalls die Spannung u.

Der Verstärker V ist zweistufig mit einer ersten Verstärkerstufe VS1 und einer zweiten Verstärkerstufe VS2, je mit einem Operationsverstärker, aufgebaut. Der invertierende Eingang des Operationsverstärkers der ersten Verstärkerstufe ist über einen Rückkopplungswiderstand RS mit dessen Ausgang und durch eine komplexe Impedanz Z mit dem Ausgang der Meßanordnung verbunden. Der invertierende Eingang des Operationsverstärkers der zweiten Verstärkerstufe ist über einen Rückkopplungswiderstand R4 mit dessen Ausgang, über einen Widerstand R2 mit dem Ausgang der ersten Verstärkerstufe und über einen Widerstand R3 mit dem Ausgang der Meßanordnung M verbunden.

Wie sich leicht zeigen läßt, verhalten sich Strom i und Spannung u an den Klemmen der Nachbildung N wie

$$i/u = 1/Zin = (1/Z)(RS/R2)(R4/RM) + (1/RM)(1 - R4/R3).$$

Es ist ohne weiteres ersichtlich, daß zur Nachbildung der Impedanz Zin eine davon abweichende Impedanz Z verwendet werden kann. Damit kann insbesondere anstelle einer in der Impedanz enthaltenen Kapazität von z.B. 115 nF eine kleinere Kapazität mit genormter Größe, z.B. 1 nF verwendet werden. Solche Kapazitäten sind auch einfacher mit engerer Toleranz zu erhalten. Sowohl bei der mechanischen Größe als auch beim Preis läßt sich eine Reduzierung auf etwa 1/10 erreichen.

Für den Fall, daß der Rückkopplungszweig mit dem Widerstand R3 fehlt, also für R4/R3 = 0, weist die nachgebildete Impedanz einen ohmschen Serienanteil auf, der mindestens so groß wie der Meßwiderstand RM ist. Durch die Einfügung des Widerstands R3 kann der Meßwiderstand beliebig groß gewählt werden.

Auf zwei besonders vorteilhafte Bemessungen soll hingewiesen werden:
- Für R2 = R3 = R4 ist Zin gleich einem reellen Vielfachen von Z, nämlich Zin = (RM/RS) Z.
- Enthält Zin einen ohmschen Serienanteil, so kann erreicht werden, daß Z keinen solchen enthält.

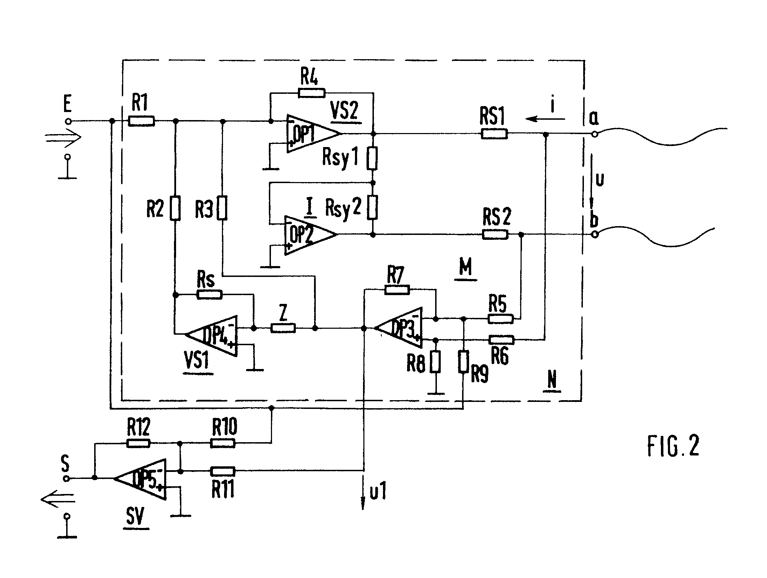

Fig. 2 zeigt nun eine erfindungsgemäße Zweidraht-Vierdraht-Schnittstelle mit einer darin enthaltenen erfindungsgemäßen Nachbildung N. Diese Schnittstellenschaltung dient der Verbindung einer unidirektional betriebenen Empfangsleitung E und einer unidirektional betriebenen Sendeleitung S einerseits mit einer bidirektional betriebenen Zweidrahtleitung a, b andererseits.

Die Zweidrahtleitung a, b ist mit der Nachbildung N abgeschlossen. Diese enthält eine Meßanordnung M, einen zweistufigen Verstärker mit den Verstärkerstufen VS1 und VS2 und einen Inverter I.

Die Nachbildung N ist hier, im Gegensatz zum Beispiel nach Fig. 1, erdsymmetrisch aufgebaut. Dies wird durch den Inverter I und die Zweiteilung des Meßwiderstands in die Meßwiderstände RS1 und RS2 erreicht.

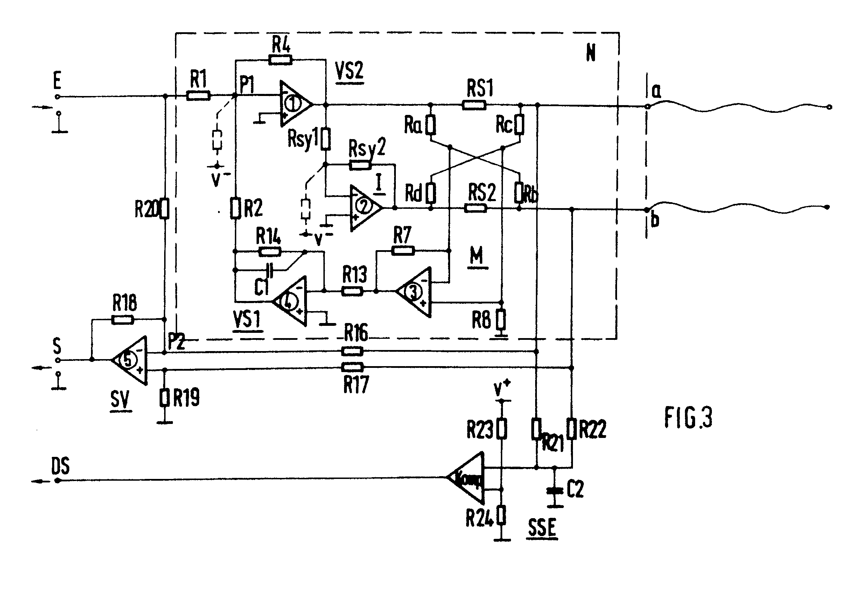

Der erdsymmetrische Aufbau hat zur Folge, daß die Meßanordnung M als Differenzverstärker aufgebaut ist. Die Meßanordnung M wird der Einfachheit halber so bemessen, daß, bei fehlender Spannung an der Empfangsleitung E, die an der Zweidrahtleitung a, b anliegende Spannung u an der Meßanordnung M die Ausgangsspannung u1 = -u hervorruft. Es wäre auch möglich, die Meßanordnung so aufzubauen und zu bemessen, daß u1 = -i (RS1 + RS2) ist. Dieser Fall liegt dem Beispiel nach Fig. 3 zugrunde.

Der Zweig von der Empfangsleitung E zur Zweidrahtleitung a, b wird im Beispiel nach Fig. 2 über einen Widerstand R9 in die Meßanordnung M eingekoppelt. Er führt damit in erster Linie über die komplexe Impedanz Z zur Verstärkerstufe VS2 und von dort über den Inverter I und die Meßwiderstände RS1 und RS2 zur Zweidrahtleitung a, b. Die Wirkung dieser Signalführung ist dieselbe wie die bei der durch das Europäische Patent 0 171 692 unter Schutz gestellten Schaltung. Zum Verständnis wird insoweit auf die zugehörige Patentschrift verwiesen. Im vorliegenden Fall wirkt aber der rein reell wirkende Zweig über den Widerstand R3 störend. Dies wird durch einen zusätzlichen rein reell wirkenden Zweig über einen Widerstand R1 von der Empfangsleitung E direkt zum invertierenden Eingang der Verstärkerstufe VS2 ausgeglichen. Die Dimensionierung ist einfach, sie ergibt sich zu R1/R3 = R9/R7.

Zur Sendeleitung S hin weist die Schnittstelle einen Sendeverstärker SV auf, der einerseits die Ausgangsspannung der Meßanordnung M auswertet und andererseits über einen Widerstand R10 ein der Spannung an der Empfangsleitung E proportionales Signal phasenrichtig hinzuaddiert, um dessen Anteil an der Ausgangsspannung der Meßanordnung M auszugleichen. Im Falle der dualen Schaltung müßte der Sendeverstärker SV die Messung der Spannung an der Zweidrahtleitung mit übernehmen.

Anhand der Figuren 3 bis 5 wird der schon erwähnte duale Fall beschrieben, bei dem die Spannungsmessung durch eine Strommessung und der Verstärkungsfaktor der Verstärkerstufe VS1 durch deren Kehrwert ersetzt wird. Anhand dieses Beispiels wird noch die Möglichkeit beschrieben, Gleichtaktsignale zu übertragen.

Die in Fig. 3 gezeigte Schnittstellenschaltung dient der Verbindung einer unidirektional betriebenen Empfangsleitung E und einer unidirektional betriebenen Sendeleitung S einerseits mit einer bidirektional betriebenen Zweidrahtleitung a, b andererseits.

Die Zweidrahtleitung a, b ist mit einer Nachbildung N abgeschlossen. Das von der Empfangsleitung E kommende Signal wird über einen in der Nachbildung N enthaltenen Summierverstärker, Verstärkerstufe zwei, VS2, in die Nachbildung eingespeist und gelangt so zur Zweidrahtleitung a, b. Zur Sendeleitung S hin weist die Schnittstelle einen Sendeverstärker SV auf, der einerseits die Spannung an der Zweidrahtleitung a, b in Differenzverstärkerschaltung auswertet und andererseits ein der Spannung an der Empfangsleitung E proportionales Signal phasenrichtig hinzuaddiert, um den Anteil der Spannung an der Zweidrahtleitung a, b auszugleichen, der von der Empfangsleitung E kommt. Weiter ist ein Steuersignalempfänger SSE vorhanden, der das Mittenpotential auf der Zweidrahtleitung a, b abgreift und mit einem vorgegebenen Schwellwert in Schmitt-Trigger-Schaltung vergleicht, um so aus einem an der Zweidrahtleitung a, b anliegenden Gleichtaktsignal ein Digitalsignal DS abzuleiten. Prinzipiell könnte anstelle eines Digitalsignals auch ein Analogsignal als Gleichtaktsignal übertragen werden. Voraussetzung dafür wären vernachlässigbare Gleichtaktstörsignale und eine Ausbildung des Steuersignalempfängers SSE in Verstärker- und nicht in Schmitt-Trigger-Schaltung. In jedem Fall ist zu berücksichtigen, daß die Zweidrahtleitung a, b für Gleichtaktsignale nicht wellenwiderstandsrichtig, sondern reell abgeschlossen ist.

Die Schnittstelle ist in der Regel Bestandteil einer Teilnehmeranschlußschaltung. Die übrigen Funktionen sind hier nicht dargestellt.

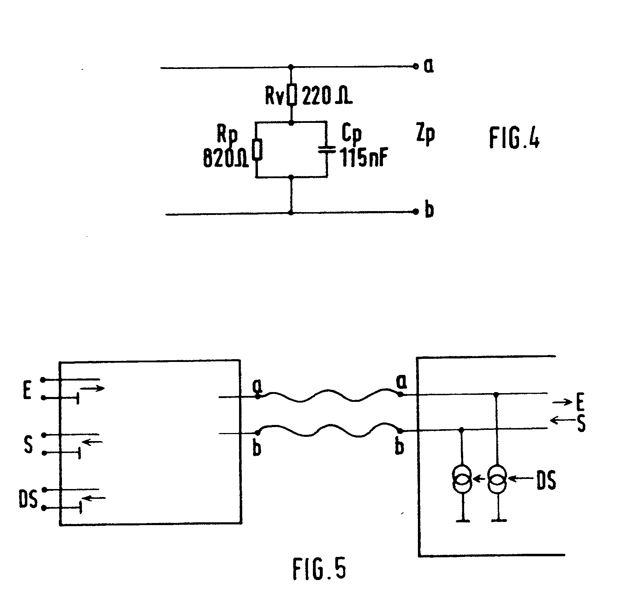

Die nachzubildende Impedanz ist in Fig. 4 dargestellt. Sie besteht aus der Reihenschaltung eines ohmschen Widerstands Rv mit einer komplexen Teilimpedanz Zp, die hier aus der Parallelschaltung eines ohmschen Widerstands Rp und einer Kapazität Cp besteht.

Diese Impedanz wird nun durch die Nachbildung N gemäß Fig. 3 realisiert. Die gezeigte Ausführungsform ist erdsymmetrisch und weist die Möglichkeit auf, das Signal von der Empfangsleitung ohne die Notwendigkeit einer Frequenzgangkompensation einzuspeisen. Eine andere Art der Einspeisung dieses Signals ist die der Stromeinspeisung, beispielsweise zusammen mit dem Fernspeisestrom, direkt in die Zweidrahtleitung a, b. Ein Beispiel einer Stromeinspeisung ist in der DE-OS 34 28 106 gezeigt (1 in Fig. 3).

Die Nachbildung N nach Fig. 3 enthält eine Meßanordnung M, einen zweistufigen Verstärker mit einer Verstärkerstufe eins, VS1, und der bereits erwähnten Verstärkerstufe zwei, VS2, und einen Inverter I.

Die Meßanordnung M enthält zunächst zwei Meßwiderstände RS1 und RS2, die gleichzeitig die gleichstrommäßigen Abschlußwiderstände der Zweidrahtleitung sind. Falls hierfür ein bestimmter Wert vorgegeben oder sonst von Vorteil ist, kann dieser hier direkt verwendet werden. Andernfalls ist die Bemessung RS1 = RS2 = Rv/2 vorteilhaft. Da der Verstärkungsfaktor der Meßanordnung M und des nachfolgenden Verstärkers beliebig wählbar ist, können die Meßwiderstände aber beliebig, wegen der Symmetrie aber untereinander gleich, gewählt werden. Sie dürfen aber nicht größer als Rv/2 sein. Da im vorliegenden Fall von überlagerten Gleichtaktströmen ausgegangen wird, wird in einer Brückenschaltung, bestehend aus den Widerständen Ra, ..., Rd eine den Gleichtaktanteil nicht enthaltende Spannung abgegriffen.

Der, hier zweistufige, Verstärker verstärkt nun das Ausgangssignal der Meßanordnung M derart, daß sich seine Ausgangsspannung zum Ausgangsstrom wie die komplexe Teilimpedanz verhält. Sein Verstärkungsfaktor muß also gleich einem reellen Vielfachen dieser Teilimpedanz sein. Der Verstärkungsfaktor eines rückgekoppelten Operationsverstärkers ist proportional zu seinem Rückkopplungswiderstand (R4 im Falle VS2) und umgekehrt proportional zu seinem Vorwiderstand (R2 im Falle VS2). Ein Verstärker, in dessen Rückkopplungszweig die vorgegebene Teilimpedanz Zp liegt und dessen Vorwiderstand reell ist, hat deshalb den geforderten Verstärkungsfaktor. Eine gleichartige Impedanz, deren Bauelemente im selben Verhältnis zueinander stehen wie bei der Teilimpedanz Zp, hat dieselbe Wirkung, wenn der Vorwiderstand entsprechend mit verändert wird. Auch eine Verstärkungsstufe mit reellem Verstärkungsfaktor, wie hier die zweite Verstärkerstufe, VS2, ändert am prinzipiellen Verhalten nichts.

Die Zweiteilung des Verstärkers mit einer reell verstärkenden zweiten Stufe hat den Vorteil, daß hier problemlos ein weiteres Signal, hier das Signal von der Empfangsleitung E, hinzusummiert werden kann. Falls dies nicht erforderlich ist, wenn beispielsweise dieses Signal wie oben erwähnt direkt in die Zweidrahtleitung eingespeist wird, genügt ein einstufiger Verstärker.

Ein einstufiger Verstärker kann zwar auch als Summierverstärker verwendet werden. Dann muß aber entweder der Vorwiderstand, mit dem das Signal von der Eingangsleitung hinzusummiert wird, die gleiche komplexe Struktur aufweisen wie der Rückkopplungswiderstand, oder es muß derjenige Vorwiderstand (hier R2), mit dem das Signal der Meßanordnung M hinzuaddiert wird, in einer Weise ausgebildet sein, daß sein komplexer Widerstand umgekehrt proportional zur Teilimpedanz Zp ist.

Durch den Inverter I wird, zusammen mit dem zweiten Meßwiderstand RS2, die Schaltung symmetrisch gegenüber Erde. Beides kann weggelassen werden, wenn die Symmetrie nicht gefordert ist.

Das Potential beider Adern der Zweidrahtleitung a, b kann gegenüber Erde angehoben oder abgesenkt werden, indem an den einander entsprechenden Eingängen der zweiten Verstärkerstufe VS2 und des Inverters I jeweils eine Gleichspannung über einen zusätzlichen Vorwiderstand hinzusummiert wird. In Fig. 3 ist dies gestrichelt dargestellt.

Ein bevorzugter Anwendungsfall ist in Fig. 5 dargestellt. Links ist sehr schematisch die Schnittstelle mit der darin enthaltenen Nachbildung und rechts, über die Zweidrahtleitung damit verbunden, ein Fernsprechendgerät dargestellt. Das Fernsprechendgerät ist dabei nur insoweit dargestellt, wie die Erzeugung des Steuersignals, Digitalsignals DS, betroffen ist. Beide Adern a und b der Zweidrahtleitung sind über je eine gesteuerte Stromquelle mit Erde verbunden. Die Steuerung der Stromquelle erfolgt durch das Digitalsignal DS.

**Ansprüche**

1. Nachbildung einer komplexen Impedanz (Zp), insbesondere Nachbildung der Impedanz einer Fernsprechteilnehmerleitung (a, b), mit einer Meßanordnung (M), die eine dem Ausgangssignal (u, i) der Nachbildung proportionale Spannung (u1) abgibt, mit einem Ausgangsverstärker (VS2) dessen Ausgangsstrom über einen Ausgangswiderstand (RM; RS1, RS2) fließt und der Ausgangsstrom (i) der Nachbildung ist, und mit einem eine zweite komplexe Impedanz (Z) enthaltenden Zweig vom Ausgang der Meßanordnung (M) zum Eingang des Ausgangsverstärkers (VS2).

2. Nachbildung nach Anspruch 1, dadurch gekennzeichnet, daß die komplexe Impedanz (Zp) aus der Reihenschaltung eines ohmschen Widerstands (Rv) mit einer komplexen Teilimpedanz (Rp, Cp) besteht, daß mit dem Ausgangsverstärker (VS2) ein Verstärker (VS1, VS2) gebildet ist, dessen Verstärkungsfaktor gleich einem reellen Vielfachen der komplexen Teilimpedanz (Rp, Cp) ist, und daß die von diesem Verstärker zu verstärkende Spannung gleich der Ausgangsspannung der Meßanordnung (M) ist, die den Strom in dem als ohmscher Meßwiderstand (RS1, RS2) ausgebildeten Ausgangswiderstand mißt.

3. Nachbildung nach Anspruch 2, dadurch gekennzeichnet, daß der Verstärker (VS1, VS2) einen rückgekoppelten Operationsverstärker (VS1) enthält, dessen Rückkopplungszweig durch die komplexe Teilimpedanz oder eine dazu gleichartige, in allen Bauelementen um denselben reellen Faktor verkleinerten oder vergrößerten Werten gebildet ist.

4. Nachbildung nach Anspruch 3, dadurch gekennzeichnet, daß der Verstärker (VS1, VS2) zweistufig aufgebaut ist, daß der Verstärkungsfaktor der zweiten Stufe (VS2) reell ist und daß die zweite Stufe als Summierverstärker ausgebildet ist.

5. Nachbildung nach Anspruch 1, dadurch gekennzeichnet, daß ein Inverter (1) vorhanden ist, der die Ausgangsspannung des Ausgangsverstärkers (VS2) invertiert, daß ein Widerstand (RS2) vorhanden ist, der gleich groß ist wie der Meßwiderstand (RS1), daß dieser Widerstand vom Ausgangsstrom des Inverters durchflossen ist und daß der Ausgangsstrom des Inverters ebenso wie der Ausgangsstrom des Verstärkers der durch die Nachbildung fließende Strom ist.

6. Nachbildung nach den Ansprüchen 2 und 5, dadurch gekennzeichnet, daß der vom Ausgangsstrom des Inverters durchflossene Widerstand (RS2) ebenfalls als Meßwiderstand verwendet wird und daß die Meßanordnung (M) denjenigen Strom mißt, der beiden Meßwiderständen (RS1, RS2) gemeinsam ist.

7. Nachbildung nach Anspruch 1, gekennzeichnet durch einen rein reell wirkenden Zweig (R3) vom Ausgang der Meßanordnung (M) zum Eingang des Ausgangsverstärkers (VS2).

8. Nachbildung nach Anspruch 7, dadurch gekennzeichnet, daß der reell wirkende Zweig so bemessen ist, daß die nachgebildete komplexe Impedanz (Zin) gleich einem reellen Vielfachen der zweiten komplexen Impedanz (Z) ist.

9. Nachbildung nach Anspruch 7, dadurch gekennzeichnet, daß der reelle Zweig so bemessen ist, daß trotz eines ohmschen Serienanteils der nachzubildenden komplexen Impedanz (Zin) die zweite komplexe Impedanz (Z) keinen ohmschen Serienanteil enthält.

10. Schnittstelle zwischen einer bidirektional betriebenen Zweidrahtleitung (a, b), insbesondere einer Fernsprechteilnehmerleitung, und zwei unidirektional betriebenen Leitungen, nämlich einer Empfangsleitung (E) und einer Sendeleitung (S), mit einem ersten Zweig von der Empfangsleitung zur Zweidrahtleitung, mit einem zweiten Zweig von der Zweidrahtleitung zur Sendeleitung, mit einem dritten Zweig von der Empfangsleitung zur Sendeleitung, und mit einer die Zweidrahtleitung abschließenden Nachbildung (N) einer komplexen Impedanz (Zp), die eine Meßanordnung (M) aufweist, die eine dem Ausgangssignal (u, i) der Nachbildung (N) proportionale Spannung (u1) abgibt, bei der die Nachbildung weiter einen Ausgangsverstärker (VS2) aufweist, dessen Ausgangsstrom über einen Ausgangswiderstand (RS1, RS2) fließt und der Ausgangsstrom (i) der Nachbildung (N) ist und mit einem eine zweite komplexe Impedanz (Z) enthaltenden Zweig vom Ausgang der Meßanordnung (M) zum Eingang des Ausgangsverstärkers (VS2).

11. Schnittstelle nach Anspruch 10, dadurch gekennzeichnet, daß die komplexe Impedanz (Zp) aus der Reihenschaltung eines ohmschen Widerstands (Rv) mit einer komplexen Teilimpedanz (Rp, Cp) besteht, daß mit dem Ausgangsverstärker (VS2) ein Verstärker (VS1, VS2) gebildet ist, dessen Verstärkungsfaktor gleich einem reellen Vielfachen der komplexen Teilimpedanz (Rp, Cp) ist, und daß die von diesem Verstärker zu verstärkende Spannung gleich der Ausgangsspannung der Meßanordnung (M) ist, die den Strom in dem als ohmscher Meßwiderstand (RS1, RS2) ausgebildeten Ausgangswiderstand mißt.

12. Schnittstelle nach Anspruch 11, dadurch gekennzeichnet, daß der Verstärker (VS1, VS2) zweistufig aufgebaut ist, daß der Verstärkungsfaktor der zweiten Stufe (VS2) reell ist, daß die zweite Stufe als Summierverstärker ausgebildet ist und daß der erste Zweig der Schnittstelle am Summierverstärker (VS2) in die Nachbildung (N) eingekoppelt wird.

13. Schnittstelle nach Anspruch 10, dadurch gekennzeichnet, daß ein Inverter (I) vorhanden ist, der die Ausgangsspannung des Ausgangsverstärker (VS2) invertiert, daß ein Widerstand (RS2) vorhanden ist, der gleich groß ist wie der Meßwiderstand (RS1), daß dieser Widerstand vom Ausgangsstrom des Inverters durchflossen ist und daß der Ausgangsstrom des Inverters ebenso wie der Ausgangsstrom des Ausgangsverstärkers der durch die Nachbildung fließende Strom (i) ist.

14. Schnittstelle nach Anspruch 13, dadurch gekennzeichnet, daß der Ausgangsverstärker und der Inverter ein gemeinsames, auf Erde bezogenes Bezugspotential aufweisen und daß ein Empfänger für Gleichtaktsignale (SSE) vorhanden ist, der erdunsymmetrische Signale auf der Zweidrahtleitung (a, b) auszuwerten vermag.

15. Schnittstelle nach Anspruch 14, dadurch gekennzeichnet, daß das auf Erde bezogene Bezugspotential von Null verschieden und größer als üblicherweise auftretende Gleichtaktstörsignale ist und daß der Empfänger für Gleichtaktsignale (SSE) digital auf solche Gleichtaktsignale anspricht, die über dem genannten Bezugspotential liegen.

16. Schnittstelle nach Anspruch 10, gekennzeichnet durch einen rein reell wirkenden Zweig (R3) vom Ausgang der Meßanordnung (M) zum Eingang des Ausgangsverstärkers (VS2).

17. Schnittstelle nach Anspruch 16, dadurch gekennzeichnet, daß die Meßanordnung (M) als Summierverstärker ausgebildet ist, daß der erste Zweig der Schnittstelle an der Meßanordnung in die Nachbildung (N) eingekoppelt wird und somit die zweite komplexe Impedanz (Z) und den rein reell wirkenden Zweig (R3) enthält und daß ein zweiter rein reell wirkender Zweig (R1) direkt von der Empfangsleitung (E) zum Ausgangsverstärker (VS2) führt und die Wirkung des (ersten) rein reell wirkenden Zweigs (R3) auf den ersten Zweig der Schnittstelle aufhebt.

FIG.1

FIG.2

EP 0 434 950 A2

FIG.3

EP 0 434 950 A2

FIG.4

FIG.5